# EUROPEAN PATENT APPLICATION

(11) **EP 2 528 393 A1**
(43) Date of publication of application: **28.11.2012**
(21) Application number: 11734767.4
(22) Date of filing: 21.01.2011
(51) Int. Cl.: H04W 48/18, H04W 36/38, H04W 48/16

(54) **MOBILE COMMUNICATION SYSTEM, NETWORK APPARATUS AND MOBILE COMMUNICATION METHOD**

(30) Priority: 21.01.2010 JP 2010011182
(71) Applicant: NTT DOCOMO, INC., Chiyoda-ku Tokyo 100-6150 (JP)
(72) Inventor: NAKAMURA, Yuichiro, Tokyo 100-6150 (JP); KAWABE, Yasuhiro, Tokyo 100-6150 (JP); MATSUTANI, Hideyuki, Tokyo 100-6150 (JP); AOYAGI, Kenichiro, Tokyo 100-6150 (JP)
(74) Representative: HOFFMANN EITLE
(86) International application number: PCT/JP2011/051098
(87) International publication number: WO 2011/090161

(57) **Abstract**

A network apparatus 20 includes a determination unit 23 configured to determine whether or not to transmit a connection instruction message instructing a UE 10 to connect with a second communication system to the UE 10. The determination unit 23 determines that a second communication instruction message is to be transmitted to the UE 10 when an elapsed time period after transmission of a first connection instruction message to the UE 10 exceeds a predetermined time period, and determines that the second connection instruction message is not to be transmitted to the UE 10 when the elapsed time period does not exceed the predetermined time period.

## Description

### TECHNICAL FIELD

The present invention relates to a mobile communication system having a mobile communication terminal, a first communication system and a second communication system, a network apparatus used in the mobile communication system, and a mobile communication method.

### BACKGROUND ART

Recently, there has been known a method of switching a communication system, with which a mobile communication terminal communicates, between multiple communication systems. The communication systems include, for example, a communication system supporting UMTS (Universal Mobile Telecommunication System) and a communication system supporting LTE (Long Term Evolution).

Here, possible methods of switching the communication system with which the mobile communication terminal communicates between the multiple communication systems are (1) Inter-RAT (Radio Access Technology) handover and (2) redirection.

(1) In the case of Inter-RAT handover, a handover is performed between multiple communication systems with the communication systems exchanging information (RAT information) required for a handover therebetween without disconnecting the communication. However, the RATs provided in the respective communication systems have to be consistent, and there are many functions required to implement the Inter-RAT handover.

(2) In the case of redirection, a mobile communication terminal shifts to a stand-by state (Idle state) and tries to connect to a new communication system, when executing the redirection (e.g., PATENT DOCUMENT 1). A message for implementing the redirection is, for example, "RRC Connection Reject" which rejects "RRC Connection Request" or "RRC Connection Release" transmitted to a mobile communication terminal at the end of the communication. Here, in the LTE, the redirection is executed using "RRC Connection Release."

The redirection does not require the exchange of information (RAT information) needed for a handover as described above, and thus does not require the harmonization of the RATs provided in the respective communication systems.

### PRIOR ART DOCUMENT

### PATENT DOCUMENT

PATENT DOCUMENT 1: Japanese Patent Translation Publication No. 2009-510969

### SUMMARY OF THE INVENTION

In the above-described redirection, the information (RAT information) needed for a handover is not exchanged between the multiple communication systems. Accordingly, the redirection to a target communication system is executed without knowing a failure or congestion of the target communication system. Thus, the redirection to the target communication system may fail due to the failure or congestion of the target communication system.

In this respect, there is a possibility that the redirection to the target communication system is further repeated because the failure or congestion of the target communication system is not known in the redirection. Accordingly, the connectivity of the mobile communication terminal to the communication system is deteriorated, and thus the performance of services provided to the mobile communication terminal is deteriorated.

For this reason, the present invention has been made with a view to solving the above problems. Accordingly, an objective of the present invention is to provide a mobile communication system, a network apparatus, and a mobile communication method which are capable of suppressing the deterioration in the connectivity of the mobile communication terminal to the communication system.

A mobile communication system according to the first feature includes a mobile communication terminal, a first communication system, and a second communication system. The first communication system has a determination unit configured to determine whether or not to transmit a connection instruction message, instructing the mobile communication terminal to connect with the second communication system, to the mobile communication system. The determination unit determines that a second communication instruction message is to be transmitted to the mobile communication terminal when an elapsed time period after transmission of a first connection instruction message to the mobile communication terminal exceeds a predetermined time period, and determines that the second connection instruction message is not to be transmitted to the mobile communication terminal when the elapsed time period does not exceed the predetermined time period.

In the first feature, the first communication system further includes a management unit configured to manage a failure rate at which a failure has occurred in a connection to the second communication system in response to the connection instruction messages previously transmitted, and the determination unit determines that the second connection instruction message is not to be transmitted to the mobile communication terminal when the failure rate is higher than a predetermined failure rate even though the elapsed time period exceeds the predetermined time period.

In the first feature, the first communication system further includes a transmission unit configured to transmit a quality measurement instruction instructing the mobile communication terminal to measure a quality of the second communication system before a trial to connect to the second communication system; and a reception unit configured to receive a quality measurement result of the second communication system from the mobile communication terminal, and the determination unit determines that the second connection instruction message is not to be transmitted to the mobile communication terminal when the quality measurement result does not meet a predetermined quality even though the elapsed time period exceeds the predetermined time period.

In the first feature, the predetermined time period differs depending on whether or not to transmit the quality measurement instruction to the mobile communication terminal before transmission of the second connection instruction message.

In the first feature, the predetermined failure rate differs depending on whether or not to transmit the first connection instruction message to the mobile communication terminal before transmission of the second connection instruction message.

A network apparatus according to the second feature is provided in a first communication system in a mobile communication system having a mobile communication terminal, the first communication system, and a second communication system. The network apparatus includes: a determination unit configured to determine whether or not to transmit a connection instruction message instructing the mobile communication terminal to connect with the second communication system to the mobile communication terminal. The determination unit determines that a second communication instruction message is to be transmitted to the mobile communication terminal when an elapsed time period after transmission of a first connection instruction message to the mobile communication terminal exceeds a predetermined time period, and determines that the second connection instruction message is not to be transmitted to the mobile communication terminal when the elapsed time period does not exceed the predetermined time period.

A mobile communication method according to the third feature applied to a mobile communication system having a mobile communication terminal, a first communication system, and a second communication system. The method comprising the steps of: determining that a second connection instruction message is to be transmitted to the mobile communication terminal when an elapsed time period after transmission of a first connection instruction message instructing a connection to the second communication system to the mobile communication terminal exceeds a predetermined time period; and determining that the second connection instruction message is not to be transmitted to the mobile communication terminal when the elapsed time period does not exceed the predetermined time period.

### BRIEF DESCRIPTION OF DRAWINGS

[Fig. 1] Fig. 1 is a drawing showing a mobile communication system 100 according to a first embodiment.
[Fig. 2] Fig. 2 is a drawing showing an example of a cell configuration according to the first embodiment.
[Fig. 3] Fig. 3 is a drawing showing a network apparatus 20 according to the first embodiment.
[Fig. 4] Fig. 4 is a sequence diagram showing an operation of the mobile communication system 100 according to the first embodiment.
[Fig. 5] Fig. 5 is a sequence diagram showing an operation of the mobile communication system 100 according to the first embodiment.
[Fig. 6] Fig. 6 is a sequence diagram showing an operation of the mobile communication system 100 according to the first embodiment.
[Fig. 7] Fig. 7 is a sequence diagram showing an operation of the mobile communication system 100 according to the first embodiment.
[Fig. 8] Fig. 8 is a flowchart showing an operation of the network apparatus 20 according to the first embodiment.
[Fig. 9] Fig. 9 is a drawing showing a network apparatus 20 according to Modification 1.
[Fig. 10] Fig. 10 is a flowchart showing an operation of the network apparatus 20 according to Modification 1.
[Fig. 11] Fig. 11 is a table showing a management table according to the Modification 2.
[Fig. 12] Fig. 12 is a flowchart showing an operation of the network apparatus 20 according to Modification 3.
[Fig. 13] Fig. 13 is a flowchart showing an operation of the network apparatus 20 according to Modification 3.
[Fig. 14] Fig. 14 is a table showing a management table according to the Modification 4.

### MODE FOR CARRYING OUT THE INVENTION

A mobile communication system according to an embodiment of the invention is described below by referring to the drawings. In the following description of the drawings, same or similar reference numerals are given to denote same or similar portions.

Note that the drawings are merely schematically shown and proportions of sizes and the like are different from actual ones. Thus, specific sizes and the like should be judged by referring to the description below. In addition, there are of course included portions where relationships or percentages of sizes of the drawings are different with respect to one another.

### [Summary of Embodiment]

A mobile communication system according to an embodiment comprises a radio communication terminal, a first communication system, and a second communication system. The first communication system has a determination unit configured to determine whether or not to transmit a connection instruction message, instructing the mobile communication terminal to connect with the second communication system, to the mobile communication terminal. When an elapsed time period after transmission of a first connection instruction message to the mobile communication terminal exceeds a predetermined time period, the determination unit determines that a second communication instruction message is to be transmitted to the mobile communication terminal. When the elapsed time period does not exceed the predetermined time, the determination unit determines that the second connection instruction message is not to be transmitted to the mobile communication terminal.

In the embodiment, the transmission of the connection instruction message to the mobile communication terminal is restricted until the elapsed time period after the transmission of the connection instruction message to the mobile communication terminal exceeds the predetermined time period. Thus, even when the first communication system does not know the failure or congestion of the second communication system, the connectivity of the mobile communication terminal to the communication system can be prevented from deteriorating.

Note that in the embodiment, the connection to the second communication system is the Inter-RAT handover from the first communication system to the second communication system or the redirection to the second communication system.

### [First Embodiment]

### (Configuration of Mobile Communication System)

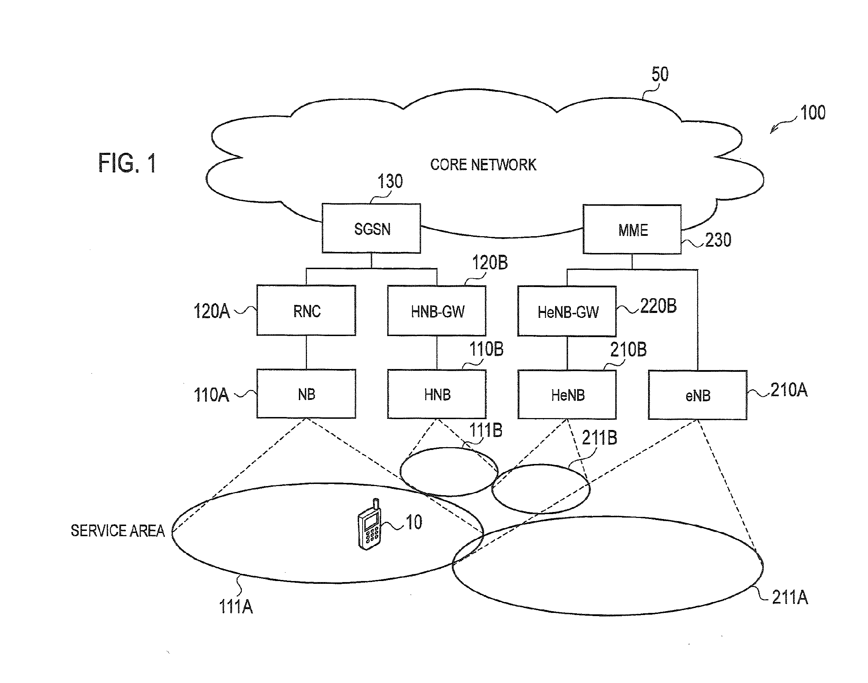

The configuration of a mobile communication system according to a first embodiment is described below by referring to the drawings. Fig. 1 is a drawing showing a mobile communication system 100 according to the first embodiment.

As shown in Fig. 1, the mobile communication system 100 includes a mobile terminal device 10 (hereinafter, UE 10) and a core network 50. In addition, the mobile communication system 100 includes a first communication system and a second communication system.

For example, the first communication system 100 is a communication system supporting UMTS (Universal Mobile Telecommunication System) . The first communication system has a base station 110A (hereinafter NB 110A), a home base station 110B (hereinafter HNB 110B), a RNC 120A, a home base station gateway 120B (hereinafter, HNB-GW 120B), and an SGSN 130.

Note that a radio access network (UTRAN; Universal Terrestrial Radio Access Network) supporting the first communication system includes the NB 110A, HNB 110B, RNC 120A, and HNB-GW 120B.

For example, the second communication system is a communication system supporting LTE (Long Term Evolution). The second communication system has, for example, a base station 210A (hereinafter eNB 210A), a home base station 210B (hereinafter HeNB 210B), a home base station gateway 220B (hereinafter, HeNB-GW 220B), and an MME 230.

Note that a radio access network (E-UTRAN; Evoled Universal Terrestrial Radio Access Network) supporting the second communication system includes the eNB 210A, HeNB 210B, and HeNB-GW 220B.

The UE 10 is a device (User Equipment) configured to communicate with the first communication system or the second communication system. For example, the UE 10 has a function to perform radio communications with the NB 110A and the HNB 110B. Or, the UE 10 has a function to perform radio communications with the eNB 210A and the HeNB 210B.

The NB 110A is a device (NodeB) having a macrocell 111A and configured to perform radio communications with the UE 10 present in the macrocell 111A.

The HNB 110B is a device (Home NodeB) having a specific cell 111B and configured to perform radio communications with the UE 10 present in the specific cell 111B.

The RNC 120A is a device (Radio Network Controller) connected with the NB 110A and configured to establish a radio connection (RRC Connection) with the UE 10 present in the macrocell 111A.

The HNB-GW 120B is a device (Home NodeB Gateway) connected with the HNB 110B and configured to establish a radio connection (RRC Connection) with the UE 10 present in the specific cell 111B.

The SGSN 130 is a device (Serving GPRS Support Node) configured to exchange packets in a packet exchange domain. The SGSN 130 is provided in the core network 50. Although omitted in Fig. 1, a device (MSC; Mobile Switching Center) to perform line switching in a line switching domain may be provided in the core network 50.

The eNB 210A is a device (evolvedNodeB) having a macrocell 211A and configured to perform radio communications with the UE 10 present in the macrocell 211A.

The HeNB 210B is a device (Home evolved NodeB) having a specific cell 211B and configured to perform radio communications with the UE 10 present in the specific cell 211B.

The HeNB-GW 220B is a device (Home evolved NodeB Gateway) connected with the HeNB 210B and configured to manage the HeNB 210B.

The MME 230 is a device (Mobility Management Entity) connected with the eNB 210A and configured to manage the mobility of the UE 10 establishing the radio connection with the HeNB 210B. Also, the MME 230 is a device connected with the HeNB 210B via the HeNB-GW 220B and configured to manage the mobility of the UE 10 establishing the radio connection with the HeNB 210B.

Note that the macrocell and the specific cell should be understood as functions to perform radio communications with the UE 10. However, the macrocell and the specific cell are also used as terms to express a service area of a cell. Also, a cell such as the macrocell or the specific cell is identified by a frequency, spread code, or time slot, which is used in a cell.

The specific cell is sometimes referred to as a femtocell, CSG (Closed Subscriber Group), or a home cell. Also, the specific cell is configured to be settable at an access type for defining UEs 10 allowed to access the specific cell. The access type is "Closed," "Hybrid," or "Open."

The "Closed" specific cell is configured to permit only a specific user (UE; User Equipment) managed by the specific cell to receive provision of services.

The "Hybrid" specific cell is configured to permit a specific user managed by the specific cell to perform communications with a high quality and is configured to permit a non-specific user not managed by the specific cell to perform communications with a best effort quality, for example.

The "Open" specific cell is configured to permit all the UEs 10 to receive provision of services, as is the case with the macrocell Here, in the "Open" cell, UEs 10 can perform communications with equal quality without being distinguished as to whether the UEs 10 are managed by the specific cell.

Note that the access type may be an "ACCESS CLASS BARRED" to prohibit an access of the UE 10 for each access class, or a "CELL BARRED" to prohibit an access of the UE 10 for each cell.

### (Example of Cell Configuration)

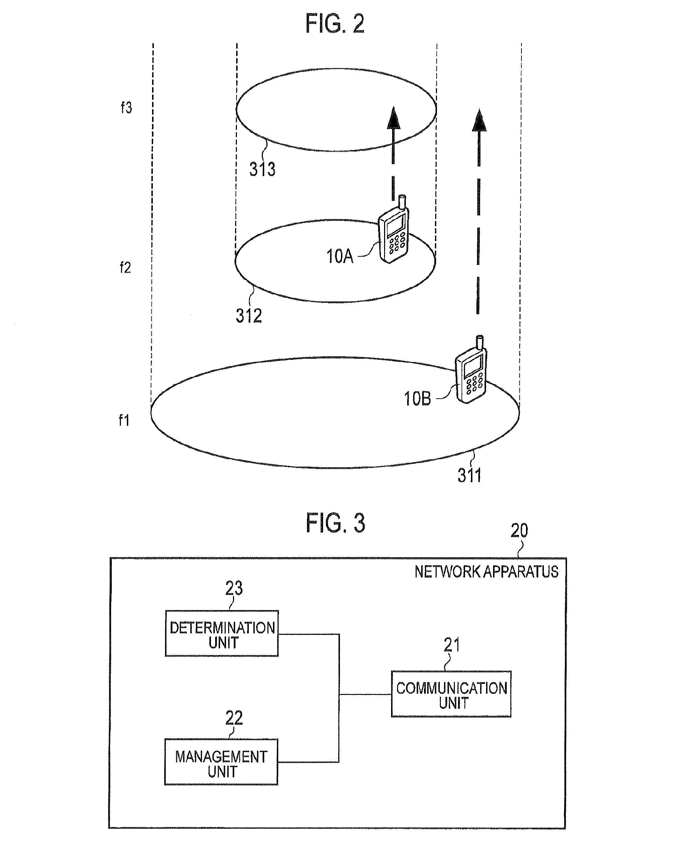

An example of a cell configuration according to the first embodiment is described below by referring to the drawings. Fig. 2 is a drawing showing an example of a cell configuration according to the first embodiment. Here, three frequencies (f1 to f3) are described as an example.

As shown in Fig. 2, a first cell 311 is provided with a frequency f1. A first cell 312 is provided with a frequency f2. A second cell 313 is provided with a frequency f3.

For example, the first cell 311 and the first cell 312 are macrocells 111A or specific cells 111B provided in the first communication system. The second cell 313 is a macrocell 211A or a specific cell 211B provided in the second communication system.

The first cell 311 has a service area which overlaps with and is wider than that of the second cell 313. The first cell 312 has a service area which overlaps with and is substantially equal to that of the second cell 313.

For example, when the UE 10A requests the connection to the first cell 311, even though the first communication system gives an instruction to connect to the second cell 313, the connection to the second cell 313 fails because the UE 10A is not present in the service area of the second cell 313. Furthermore, there is a high possibility that the UE 10A requests the connection to the first cell 311, which results in repeatedly instructing the connection to the second cell 313.

On the other hand, when the UE 10B requests the connection to the first cell 312, if the first communication system instructs the connection to the second cell 313 , the connection to the second cell 313 succeeds because the UE 10B is present in the service area of the second cell 313.

### (Configuration of Network Apparatus)

The configuration of the network apparatus according to the first embodiment is described below by referring to the drawings. Fig. 3 is a drawing showing the network apparatus 20 according to the first embodiment. As shown in Fig. 3, the network apparatus 20 has a communication unit 21, a management unit 22, and a determination unit 23.

Note that the network apparatus 20 may be an apparatus (such as NB 110A, eNB 210A) which manages a macrocell. Also, the network apparatus 20 may be an apparatus (such as RNC 120A, SGSN 130, MME 230) provided in an upper level of an apparatus managing a macrocell.

It should be noted that in the following description, a connection (redirection) to the second communication system (LTE) is mainly described as an example. In such a case, the network apparatus 20 is, for example, an RNC 120A.

The communication unit 21 performs communications with the UE 10. Also the communication unit 21 performs communications with other network apparatus.

For example, the communication unit 21 receives a connection request message (e.g., "RRC Connection Request") from the UE 10 visiting the macrocell provided under the network apparatus 20.

Also, the communication unit 21 transmits a connection instruction message instructing the UE 10 to connect to the second communication system to the UE 10. Note that the connection instruction message is a connection rejection message (e.g., "RRC Connection Reject") transmitted to the UE 10 in an idle state according to the connection request message. Or, the connection instruction message is a connection release message (e.g., "RRC Connection Release") transmitted to the UE 10 in a connected state.

The management unit 22 manages a management table containing information to determine whether or not to transmit the connection instruction message to the UE 10. For example, the management table of the management unit 22 manages a threshold (hereinafter, a predetermined time period) to be compared with an elapsed time period after previous transmission of the connection instruction message to the UE 10.

The determination unit 23 determines whether or not to transmit the connection instruction message to the UE 10. Specifically, the determination unit 23 determines that the connection instruction message is to be transmitted to the UE 10 when the elapsed time period after the previous transmission of the connection instruction message to the UE 10 exceeds a predetermined time period managed by the management unit 22.

On the other hand, the determination unit 23 determines that the connection instruction message is not to be transmitted to the UE 10 when the elapsed time period after the previous transmission of the connection instruction message to the UE 10 does not exceed the predetermined time period managed by the management unit 22.

### (Operation of Mobile Communication System)

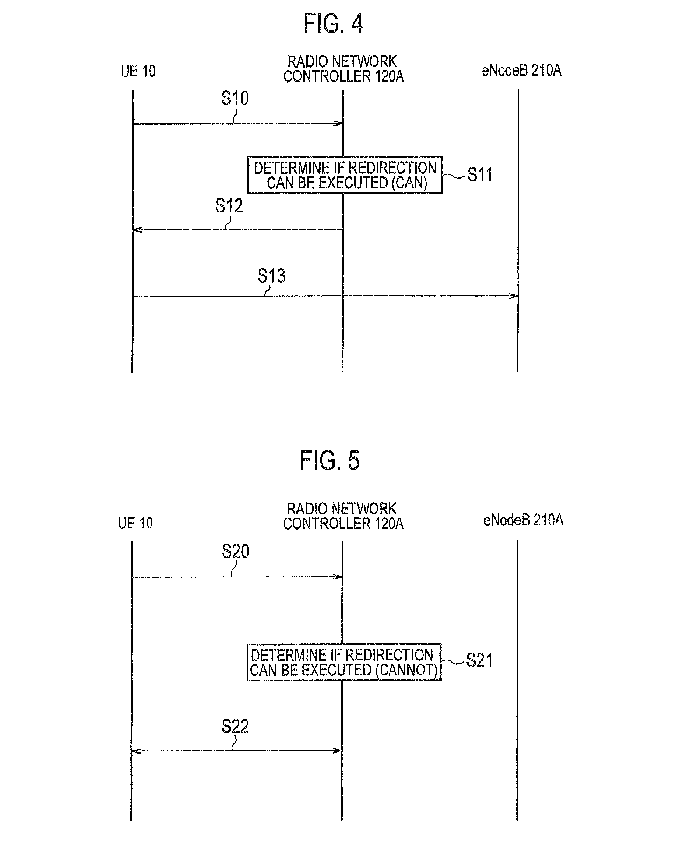

The operation of the mobile communication system according to the first embodiment is described below by referring to the drawings. Figs. 4 to 7 are sequence diagrams, each showing an operation of the mobile communication system according to the first embodiment.

Firstly, described is a case where the UE 10 in the idle state tries to connect to the second communication system. Fig. 4 shows a case where a connection to the second communication system is instructed, while Fig. 5 shows a case where a connection to the second communication system is not instructed.

As shown in Fig. 4, in the case where the connection to the second communication system is instructed, at Step 10, the UE 10 transmits a connection request message (e.g., "RRC Connection Request") to the RNC 120A (i.e., the network apparatus 20).

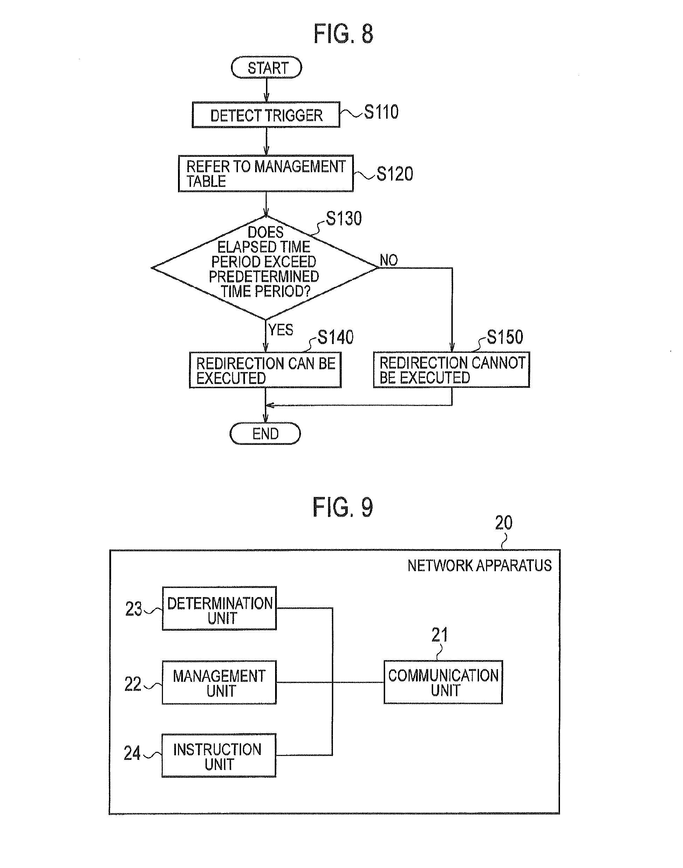

At Step 11, the RNC 120A determines if the connection (the redirection) to the second communication system can be executed. Here, the RNC 120A determines that the connection instruction message is to be transmitted to the UE 10. Note that the details of Step 11 are described later (see Fig. 8).

At Step 12, the RNC 120A transmits a connection rejection message (e.g., "RRC Connection Reject") to the UE 10 as a connection instruction message.

At Step 13 , the UE 10 transmits a connection instruction message instructing a connection to the second communication system (LTE) (redirection) with respect to the eNB 210A.

As shown in Fig. 5, in the case where the connection to the second communication system is not instructed, at Step 20, the UE 10 transmits a connection request message (e.g., "RRC Connection Request") to the RNC 120A (i.e., the network apparatus 20).

At Step 21, the RNC 120A determines if the connection (the redirection) to the second communication system can be executed. Here, the RNC 120A determines that the connection instruction message is not to be transmitted to the UE 10. Note that the details of Step 21 are described later (see Fig. 8).

At Step 22, the RNC 120A establishes a connection (e.g., RRC Connection) between the RNC 120A and the UE 10.

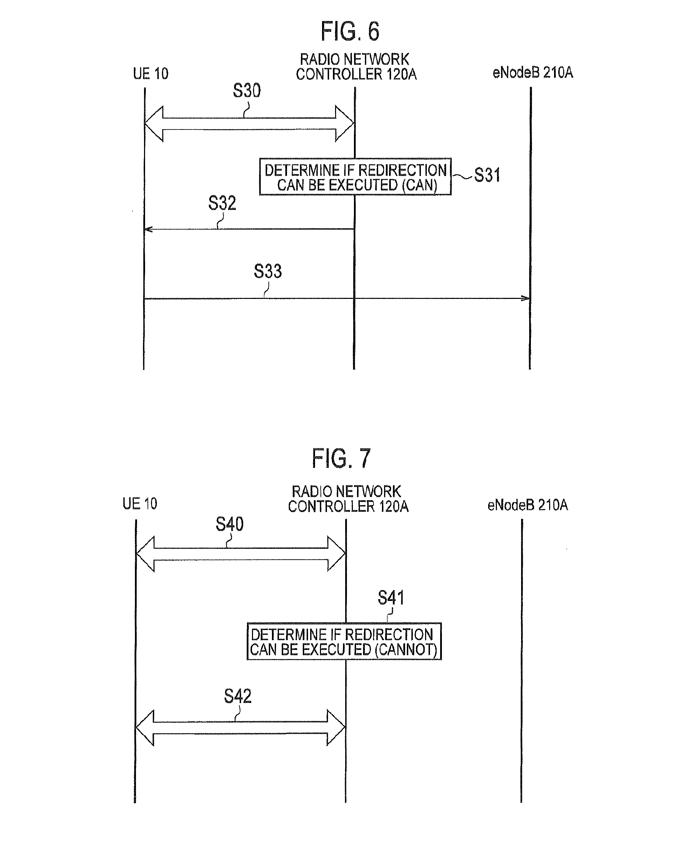

Secondly, described is a case where the UE 10 in the connected state tries to connect to the second communication system. Fig. 6 shows a case where a connection to the second communication system is instructed, while Fig. 7 shows a case where a connection to the second communication system is not instructed.

As shown in Fig. 6, in the case where the connection to the second communication system is instructed, at Step 30, the UE 10 performs communications with the first communication system. In other words, the connection (e.g., RRC Connection) is established between the UE 10 and the RNC 120A (i.e., the network apparatus 20).

At Step 31, the RNC 120A determines if the connection (the redirection) to the second communication system can be executed. Here, the RNC 120A determines that the connection instruction message is to be transmitted to the UE 10. Note that the details of Step 31 are described later (see Fig. 8).

At Step 32, the RNC 120A transmits a connection rejection message (e.g., "RRC Connection Reject") to the UE 10 as a connection instruction message.

At Step 33, the UE 10 transmits a connection instruction message instructing a connection to the second communication system (LTE) (redirection) with respect to the eNB 210A.

As shown in Fig. 7, in the case where the connection to the second communication system is not instructed, at Step 40, the UE 10 performs communications with the first communication system. In other words, a connection (e.g., RRC Connection) is established between the UE 10 and the RNC 120A (i.e., the network apparatus 20).

At Step 41, the RNC 120A determines if the connection (the redirection) to the second communication system can be executed. Here, the RNC 120A determines that the connection instruction message is not to be transmitted to the UE 10. Note that the details of Step 41 are described later (see Fig. 8).

At Step 42, the connection (e.g. , RRC Connection) between the RNC 120A and the UE 10 is maintained.

### (Operation of Network Apparatus)

An operation of the network apparatus according to the first embodiment is described below by referring to the drawings. Fig. 8 is a flowchart showing an operation of the network apparatus 20 according to the first embodiment. Here, the description is given to an operation of the RNC 120A (i.e. , the network apparatus 20) at Step 11, Step 21, Step 31 and Step 41.

As shown in Fig. 8, at Step 110, the RNC 120A detects a trigger for determining whether to instruct a connection to the second communication system. For example, the RNC 120A detects a connection request message (e.g., "RRC Connection Request") from the UE 10 in an idle state. Or, the RNC 120A detects that an amount of interference received by the UE 10 in a connected state exceeds a predetermined amount of interference.

At step 120, the RNC 120A referrers to the management table managed by the management unit 22. Specifically, the RNC 120A reads the predetermined time period which is compared with the elapsed time period after the transmission of the connection instruction message to the UE 10.

At Step 130, the RNC 120A determines if the elapsed time period after the previous transmission of the connection instruction message to the UE 10 exceeds the predetermined time period. When the elapsed time period exceeds the predetermined time period, the RNC 120A proceeds to processing at Step 140. When the elapsed time period does not exceed the predetermined time period, the RNC 120A proceeds to processing at Step 150.

At Step 140, the RNC 120A determines that the connection instruction message instructing the connection to the second communication system is to be transmitted to the UE 10. In other words, the RNC 120A determines that the redirection can be executed.

At Step 150, the RNC 120A determines that the connection instruction message instructing the connection to the second communication system is not to be transmitted to the UE 10. In other words, the RNC 120A determines that the redirection cannot be executed.

### (Advantageous Effects)

In the first embodiment, the transmission of the connection instruction message to the UE 10 is restricted until the elapsed time period after the transmission of the connection instruction message to the UE 10 exceeds the predetermined time period. Thus, even when the first communication system does not know the failure or congestion of the second communication system, the connectivity of the UE 10 to the communication system can be prevented from deteriorating.

### [Modification 1]

Modification 1 of the first embodiment is described below by referring to the drawings. In the following description, portions different from those of the first embodiment are mainly described.

Specifically, in Modification 1, a network apparatus 20 transmits a quality measurement instruction instructing a UE 10 to measure a quality of a second communication system before trying to connect to the second communication system.

### (Configuration of Network Apparatus)

The configuration of the network apparatus according to Modification 1 is described below by referring to the drawings. Fig. 9 is a drawing showing the network apparatus 20 according to Modification 1. As shown in Fig. 9, the network apparatus 20 has an instruction unit 24 in addition to the configuration shown in Fig. 3.

The instruction unit 24 instructs the UE 10 to measure a quality of the second communication system upon detection of a trigger for determining whether or not to instruct a connection to the second communication system. Specifically, the instruction unit 24 instructs a communication unit 21 to transmit a quality measurement instruction to the UE 10.

The above-described communication unit 21 receives a quality measurement result transmitted from the UE 10 according to the quality measurement instruction. The quality measurement result is, for example, a receiving quality (such as SIR (Signal to Interference Ratio)) of a pilot transmitted from a cell being provided in the second communication system.

The above-described determination unit 23 determines if the connection instruction message instructing the connection to the second communication system is to be transmitted to the UE 10 based on (a) whether the elapsed time period after the previous transmission of the connection instruction message to the UE 10 exceeds the predetermined time period, and (b) whether the quality measurement result meets a predetermined quality.

Specifically, the determination unit 23 determines that the connection instruction message is to be transmitted to the UE 10 when the elapsed time period after the previous transmission of the connection instruction message to the UE 10 exceeds the predetermined time period and the quality measurement result meets the predetermined quality.

On the other hand, the determination unit 23 determines that the connection instruction message is not to be transmitted to the UE 10 when the elapsed time period after the previous transmission of the connection instruction message to the UE 10 does not exceed the predetermined time period. Also, the determination unit 23 determines that the connection instruction message is not to be transmitted to the UE 10 when the quality measurement result does not meet the predetermined quality. In other words, the determination unit 23 determines that the connection instruction message is not to be transmitted to the UE 10 if the quality measurement result does not meet the predetermined quality even though the elapsed time period exceeds the predetermined time period.

### (Operation of Network Apparatus)

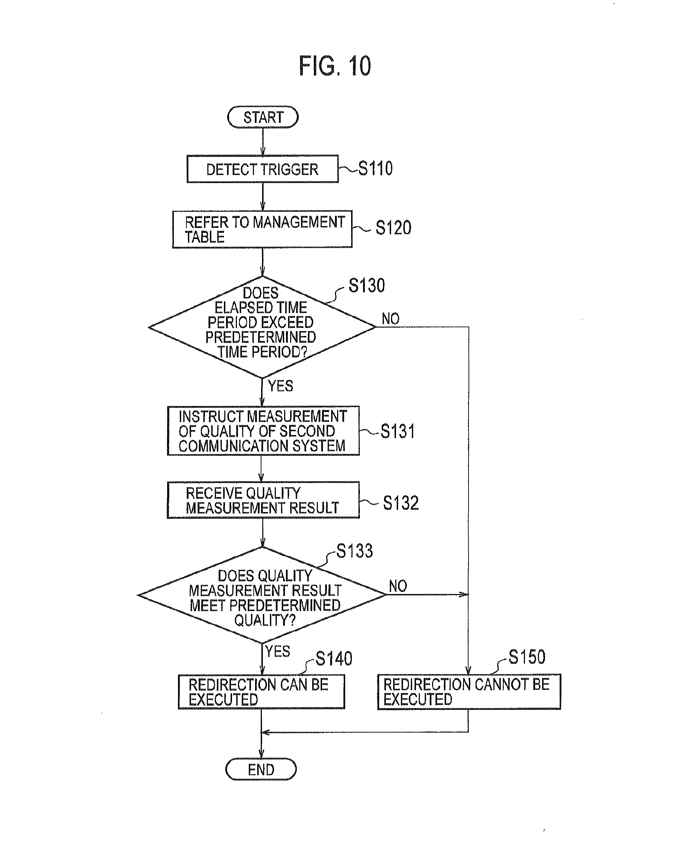

An operation of the network apparatus according to Modification 1 is described below by referring to the drawings. Fig. 10 is a flowchart showing an operation of the network apparatus 20 according to Modification 1. Here, as similar to Fig. 8, the description is given to an operation of a RNC 120A (i.e., the network apparatus 20) at Step 11, Step 21, Step 31 and Step 41.

Note that in Fig. 10, process steps similar to those of Fig. 8 are given similar step numbers. Specifically, in Fig. 10, Step 131 to Step 133 are added to the processing shown in Fig. 8.

As shown in Fig. 10, at Step 131, the RNC 120A instructs the UE 10 to measure a quality of the second communication system. Specifically, the RNC 120A transmits a quality measurement instruction to the UE 10.

At Step 132, the RNC 120A receives a quality measurement result of the second communication system from the UE 10.

At Step 133, the RNC 120A determines if the quality measurement result meets a predetermined quality. When the quality measurement result meets the predetermined quality, the RNC 120A proceeds to processing at Step 140. When the quality measurement result does not meet the predetermined quality, the RNC 120A proceeds to processing at Step 150.

Note that although the determination processing at Step 10 is performed before the determination processing at Step 133 in Fig. 10, the determination processing at Step 133 may be performed before the determination processing at Step 10. However, in order to avoid uselessly transmitting a quality measurement instruction, the determination processing at Step 10 is preferably performed before the determination processing at Step S133.

### [Modification 2]

Modification 2 of the first embodiment is described below by referring to the drawings. In the following description, portions different from those of the first embodiment and Modification 1 are mainly described.

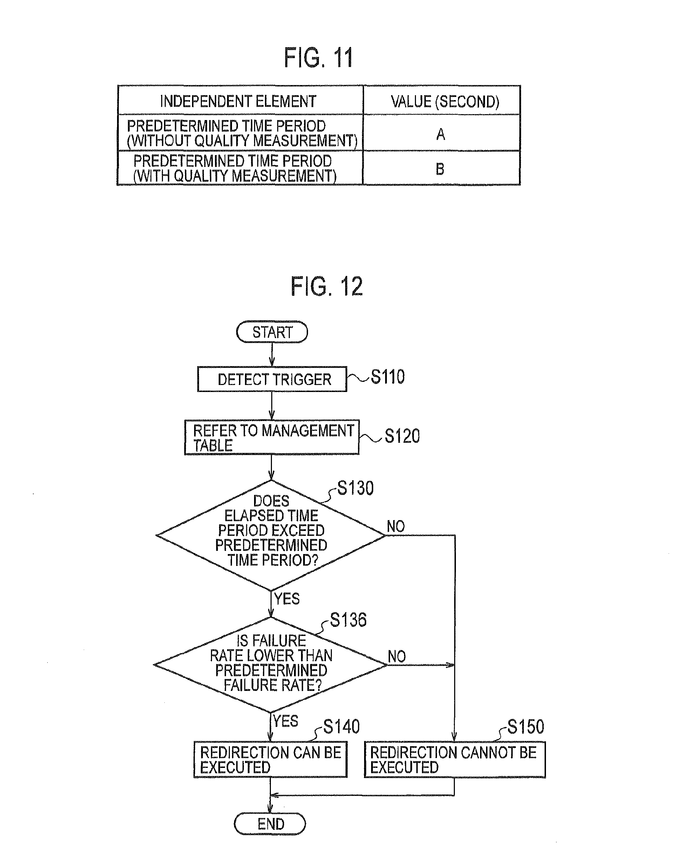

Specifically, in Modification 2, a network apparatus 20 manages information shown in Fig. 11 as information for determining whether or not to transmit a connection instruction message to a UE 10.

As shown in Fig. 11, as an independent element, a management table of a management unit 22 manages a threshold (hereinafter, a predetermined time period) to be compared with an elapsed time period after the transmission of the connection instruction message to the UE 10. The predetermined time period differs depending on whether or not to transmit a quality measurement instruction before a connection instruction message.

Note that in Fig. 11, the predetermined time period with transmission of the quality measurement instruction is "A" and the predetermined time period without transmission of the quality measurement instruction is "B". The two possible cases of an inequality relation between the predetermined time period "A" and the predetermined time period "B" are as follows.

### (1) First case

In a first case, when a quality measurement result is used for determining if a redirection can be executed, it is assumed that the redirection is not performed in response to the connection instruction message previously transmitted to the UE 10 due to a failure of the second communication system. On the basis of such assumption, it is preferable that the predetermined time period "B" with transmission of the quality measurement instruction be longer than the predetermined time period "A" without transmission of the quality measurement instruction.

### (2) Second case

In a second case, when a quality measurement result is not used for determining if the redirection can be executed, it is assumed that the redirection is not performed in response to the connection instruction message previously transmitted to the UE 10 due to deterioration in the communication quality of the second communication system. On the basis of such assumption, it is preferable that the predetermined time period "A" without transmission of the quality measurement instruction "B" with transmission of the quality measurement instruction.

Here, the above-described determination unit 23 determines whether or not to transmit the connection instruction message based on whether the elapsed time period exceeds the predetermined time period "A" when the quality measurement instruction is not transmitted before transmission of the connection instruction message. On the other hand, the determination unit 23 determines whether or not to transmit the connection instruction message based on whether the elapsed time period exceeds the predetermined time period "B" when the quality measurement instruction is transmitted before transmission of the connection instruction message.

### [Modification 3]

Modification 3 of the first embodiment is described below by referring to the drawings. In the following description, portions different from those of the first embodiment are mainly described.

Specifically, in Modification 3, a network apparatus 20 manages a failure rate (hereinafter, a redirection failure rate) at which a failure has occurred in a connection to the second communication system in response to a connection instruction message.

Specifically, the above-described management table of the management unit 22 manages, for each UE 10, a failure rate (hereinafter, a redirection failure rate) at which a failure has occurred in the connection (the redirection) to the second communication system in response to the connection instruction message. In addition, the management table of the management unit 22 manages a threshold (hereinafter, a predetermined failure rate) which is compared with the redirection failure rate.

Note that the redirection failure rate is preferably reset for each predetermined period. Or, the history of the redirection failure is preferably deleted for each predetermined period.

The above-described determination unit 23 determines whether or not to transmit the connection instruction message instructing the connection to the second communication system to the UE 10 based on (a) whether the elapsed time period after the previous transmission of the connection instruction message to the UE 10 exceeds a predetermined time period, and (b) whether the redirection failure rate is lower than a predetermined failure rate.

Specifically, the determination unit 23 determines that the connection instruction message is to be transmitted to the UE 10 when the elapsed time period after the previous transmission of the connection instruction message to the UE 10 exceeds the predetermined time period and also when the redirection failure rate is lower than the predetermined failure rate.

On the other hand, the determination unit 23 determines that the connection instruction message is not to be transmitted to the UE 10 when the elapsed time period after the previous transmission of the connection instruction message to the UE 10 does not exceed the predetermined time period. Also, the determination unit 23 determines that the connection instruction message is not to be transmitted to the UE 10 when the redirection failure rate is higher than the predetermined failure rate. In other words, the determination unit 23 determines that the connection instruction message is to be not transmitted to the UE 10 if the redirection failure rate is higher than the predetermined failure rate even though the elapsed time period exceeds the predetermined time period.

### (Operation of Network Apparatus)

An operation of the network apparatus according to Modification 3 is described below by referring to the drawings. Fig. 12 is a flowchart showing an operation of the network apparatus 20 according to Modification 3. Here, as similar to Fig. 8, the description is given to an operation of the RNC 120A (i.e., the network apparatus 20) at Step 11, Step 21, Step 31 and Step 41.

Note that in Fig. 12, process steps similar to those of Fig. 8 are given of similar step numbers. Specifically, in Fig. 12, Step 136 is added to the processing shown in Fig. 8.

As shown in Fig. 12, at Step 136, the RNC 120A determines if the redirection failure rate is lower than a predetermined failure rate. When the redirection failure rate is lower than the predetermined failure rate, the RNC 120A proceeds to processing at Step 140. When the redirection failure rate is higher than the predetermined failure rate, the RNC 120A proceeds to processing at Step 150.

Note that although the determination processing at Step 10 is performed before the determination processing at Step 136 in Fig. 12, the determination processing at Step 136 may be performed before the determination processing at Step 10.

### (Method of Acquiring Redirection Failure Rate)

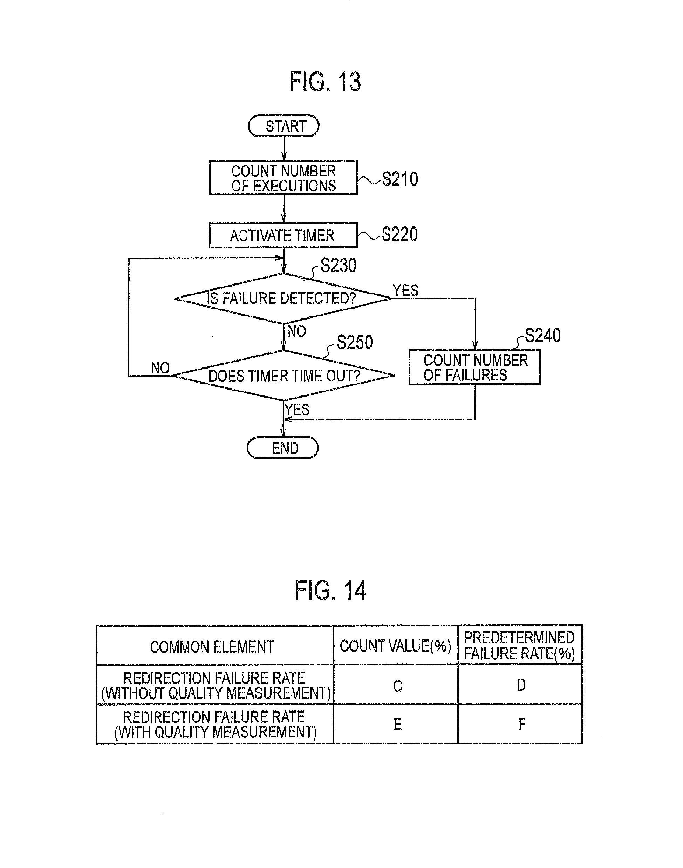

A method of acquiring a redirection failure rate according to Modification 3 is described below by referring to the drawings. Fig. 13 is a flowchart showing an operation of the network apparatus 20 according to Modification 3. Note that the flowchart shown in Fig. 13 shows the operation after the connection instruction message is transmitted to the UE 10.

As shown in Fig. 13, at Step 210, the network apparatus 20 counts the number of transmitting the connection instruction message (i.e., the number of executing the redirection).

At Step 220, the network apparatus 20 activates a timer in which a determination time is set.

At Step 230, the network apparatus 20 determines if a failure of the connection (the redirection) to the second communication system is detected. For example, when a connection request message (e.g., "RRC Connection Request") is received from the UE 10, the network apparatus 20 detects the failure of the redirection. When the failure of the redirection is detected, the step proceeds to processing at Step 240. When the failure of the redirection is not detected, the step proceeds to processing at Step 250.

At Step 240, the network apparatus 20 counts the number of redirection failures. With this operation, the network apparatus 20 updates the redirection failure rate.

At Step 250, the network apparatus 20 determines if the timer in which the determination time is set at Step 220 times out. When the timer times out, the network apparatus 20 terminates the series of processing. If the timer does not time out yet, the step returns to the processing at Step 230.

Note that although not shown in Fig. 13, when the timer times out, the network apparatus 20 may count the number of redirection successes.

### [Modification 4]

Modification 4 of the first embodiment is described below by referring to the drawings. In the following description, portions different from those of the first embodiment and Modification 1 are mainly described.

Specifically, in Modification 4, a network apparatus 20 manages information shown in Fig. 14 as information for determining whether or not to transmit the connection instruction message to the UE 10.

As shown in Fig. 14, for each UE as a common element, a management table of a management unit 22 manages a redirection failure rate at which a failure has occurred in the connection (a redirection) to the second communication system in response to the connection instruction message. The redirection failure rate differs depending on whether or not to transmit a quality measurement instruction before transmission of the connection instruction message.

Note that in Fig. 14, the redirection failure rate without transmission of the quality measurement instruction is "C" and the predetermined failure rate which is compared with the redirection failure rate is "D". The redirection failure rate with transmission of the quality measurement instruction is "E" and the predetermined failure rate to be compared with the redirection failure rate is "F". The two possible cases of an inequality relation between the predetermined failure rates to be compared with the redirection failure rates are as follows.

### (1) First case

In a first case, when a quality measurement result is used for determining if the redirection can be executed, it is assumed that the redirection is not performed in response to the connection instruction message previously transmitted to the UE 10 due to a failure of the second communication system. On the basis of such assumption, it is preferable that the predetermined failure rate "F" with transmission of the quality measurement instruction be higher than the predetermined failure rate "D" without transmission of the quality measurement instruction.

### (2) Second case

In a second case, when a quality measurement result is not used for determining if the redirection can be executed, it is assumed that the redirection is not performed in response to the connection instruction message previously transmitted to the UE 10 due to deterioration in the communication quality of the second communication system. On the basis of such assumption, it is preferable that the predetermined failure rate "D" without transmission of the quality measurement instruction be higher than the predetermined failure rate "F" with transmission of the quality measurement instruction.

Here, the determination unit 23 determines whether or not to transmit the connection instruction message based on whether the redirection failure rate "C" exceeds the predetermined failure rate "D" when the quality measurement instruction is not transmitted before transmission of the connection instruction message. On the other hand, the determination unit 23 determines whether or not to transmit the connection instruction message based on whether the redirection failure message "E" exceeds the predetermined failure rate "F" when the quality measurement instruction is transmitted before transmission of the connection instruction message.

### [Other Embodiments]

The present invention has been described by using the above-described embodiment. However, it should not be understood that the description and the drawings, which constitute one part of this disclosure, are to limit the present invention. Various alternative embodiments, examples, and operational techniques will be obvious for those who are in the art from this disclosure.

In the above-described embodiment, the first communication system is a communication system supporting UMTS and the second communication system is a communication system supporting LTE. In other words, the connection to LTE (the redirection) is described. However, the embodiment is not limited to that configuration. Specifically, the first communication system may be a communication system supporting LTE and the second communication system may be a communication system supporting UMTS. In other words, the present invention may be applied to a connection to UMTS (the redirection). Furthermore, the second communication system may be a communication system having other RAT (Radio Access Technology) such as Wi-MAX.

In the above-described embodiment, the description is mainly given to the redirection as the connection to the second communication system. The connection to the second communication system may be, for example, an Inter-RAT handover.

Although it is not described in the above-described embodiment, the network apparatus 20 may determine if the UE 10 has an ability to connect with the second communication system.

The above-described embodiment illustrates the case where the configuration (the communication unit 21, the management unit 22, the determination unit 23, and the instruction unit 24) provided in the network apparatus 20 is provided in one apparatus. However, the embodiment is not limited to that configuration. In other words, the communication unit 21, the management unit 22, the determination unit 23, and the instruction unit 24 may be provided in other apparatuses, respectively.

Control signals such as RANAP (Radio Access Network Application Part), NBAP (Node B Application Part), RNSAP (Radio Network Subsystem Application Part), and HNBAP (Home Node B Application Part) are used in communications between respective apparatuses.

Note that the operation of the network apparatus 20 may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the network apparatus 20. Also, the storage medium and the processor may be provided in the network apparatus 20 as a discrete component.

Note that the entire content of Japanese Patent Application No. 2010-011182 (filed on January 21, 2010) is incorporated herein by reference.

### INDUSTRIAL APPLICABILITY

The present invention can provide a mobile communication system, a network apparatus, and a mobile communication method, which can suppress deterioration in the connectivity of the mobile communication terminal to the communication system. Thus, the present invention is useful in a radio communication and the like.

### EXPLANATION OF THE REFERENCE NUMERALS

10... mobile terminal device, 20... network apparatus, 21... communication unit, 22... management unit, 23...determination unit, 24... instruction unit, 50... core network, 100... mobile communication system, 110A... NB, 110B... HNB, 111A... macrocell, 111B... specific cell, 120A... RNC, 120B... HNB-GW, 130... SGSN, 210A... eNB, 210B... HeNB, 211A... macrocell, 211B... specific cell, 220B... HeNB-GW, 230... MME, 311, 312... first cell, 313... second cell

## Claims

1. A mobile communication system comprising a mobile communication terminal, a first communication system, and a second communication system, wherein
the first communication system has a determination unit configured to determine whether or not to transmit a connection instruction message, instructing the mobile communication terminal to connect with the second communication system, to the mobile communication system,
the determination unit determines that a second communication instruction message is to be transmitted to the mobile communication terminal when an elapsed time period after transmission of a first connection instruction message to the mobile communication terminal exceeds a predetermined time period, and determines that the second connection instruction message is not to be transmitted to the mobile communication terminal when the elapsed time period does not exceed the predetermined time period.

2. The mobile communication system according to claim 1, wherein
the first communication system further includes a management unit configured to manage a failure rate at which a failure has occurred in a connection to the second communication system in response to the connection instruction messages previously transmitted, and
the determination unit determines that the second connection instruction message is not to be transmitted to the mobile communication terminal when the failure rate is higher than a predetermined failure rate even though the elapsed time period exceeds the predetermined time period.

3. The mobile communication system according to claim 1, wherein
the first communication system further includes: a transmission unit configured to transmit a quality measurement instruction instructing the mobile communication terminal to measure a quality of the second communication system before a trial to connect to the second communication system; and a reception unit configured to receive a quality measurement result of the second communication system from the mobile communication terminal, and
the determination unit determines that the second connection instruction message is not to be transmitted to the mobile communication terminal when the quality measurement result does not meet a predetermined quality even though the elapsed time period exceeds the predetermined time period.

4. The mobile communication system according to claim 2, wherein
the first communication system further includes a transmission unit configured to transmit a quality measurement instruction instructing the mobile communication terminal to measure a quality of the second communication system before a trial to connect to the second communication system; and a reception unit configured to receive a quality measurement result of the second communication system from the mobile communication terminal, and
the determination unit determines that the second connection instruction message is not to be transmitted to the mobile communication terminal when the quality measurement result does not meet a predetermined quality even though the elapsed time period exceeds the predetermined time period.

5. The mobile communication system according to claim 3, wherein the predetermined time period differs depending on whether or not to transmit the quality measurement instruction to the mobile communication terminal before transmission of the second connection instruction message.

6. The mobile communication system according to claim 4, wherein the predetermined failure rate differs depending on whether or not to transmit the first connection instruction message to the mobile communication terminal before transmission of the second connection instruction message.

7. A network apparatus provided in a first communication system in a mobile communication system having a mobile communication terminal, the first communication system, and a second communication system, the network apparatus comprising:
a determination unit configured to determine whether or not to transmit a connection instruction message instructing the mobile communication terminal to connect with the second communication system to the mobile communication terminal, wherein
the determination unit determines that a second communication instruction message is to be transmitted to the mobile communication terminal when an elapsed time period after transmission of a first connection instruction message to the mobile communication terminal exceeds a predetermined time period, and determines that the second connection instruction message is not to be transmitted to the mobile communication terminal when the elapsed time period does not exceed the predetermined time period.

8. A mobile communication method applied to a mobile communication system having a mobile communication terminal, a first communication system, and a second communication system, the method comprising the steps of:
determining that a second connection instruction message is to be transmitted to the mobile communication terminal when an elapsed time period after transmission of a first connection instruction message instructing a connection to the second communication system to the mobile communication terminal exceeds a predetermined time period; and
determining that the second connection instruction message is not to be transmitted to the mobile communication terminal when the elapsed time period does not exceed the predetermined time period.
